# EUROPEAN PATENT SPECIFICATION

(11) **EP 0 334 658 B1**
(45) Date of publication and mention of the grant of the patent: **09.02.1994**
(21) Application number: 89302926.4
(22) Date of filing: 23.03.1989
(51) Int. Cl.: H04N 3/18

(54) **Power supply**
Stromversorgungsanordnung
Alimentation

(30) Priority: 25.03.1988 GB 8807209; 31.08.1988 US 238631
(43) Date of publication of application: 27.09.1989
(73) Proprietor: RCA Thomson Licensing Corporation, Princeton, NJ 08540 (US)
(72) Inventor: Haferl, Peter Eduard, CH-8134 Adliswil (CH)
(74) Representative: Pratt, Richard Wilson

(56) References cited:
- FR-A- 2 069 983
- US-A- 3 745 246
- US-A- 4 272 705
- PATENT ABSTRACTS OF JAPAN vol. 4, no. 63 (E-10)(545), 13 May 1980; & JP-A-55031380 (MATSUSHITA) 05-03-1980

## Description

The invention relates to a high voltage power supply of a television apparatus.

A conventional horizontal deflection circuit of a television receiver typically includes a flyback transformer. A high voltage such as, for example, an ultor voltage, may be generated from a retrace pulse voltage in the flyback transformer using a "diode split" arrangement. In such arrangement, a segmented, tertiary high voltage winding of the flyback transformer is coupled in series with, for example, four rectifier diodes. One end terminal of the tertiary or high voltage winding is coupled to an ultor voltage terminal of a cathode ray tube (CRT). The other end terminal of the high voltage may be coupled to a filter capacitor that is coupled in parallel with a resistor across which the average beam current is sampled. The beam current representative voltage developed across the resistor may be used for controlling, in a well known manner, the operation of a beam current limiter.

The high voltage rectifier diodes conduct during a short interval, close to the peak of the retrace pulse voltage that is developed in the high voltage winding. When the retrace pulse voltage starts sloping down, during the second half of retrace, the rectifier diodes become abruptly nonconductive, causing, disadvantageously, an oscillatory ringing current to flow in the high voltage winding, having initially a high amplitude with a gradually decreasing envelope that may continue during the trace interval.

The ringing current is generated by the energy stored in the leakage inductance between a primary winding and the tertiary winding of the flyback transformer. The leakage inductance is required for obtaining a resonance circuit that is tuned to, for example, the fifth harmonic of the horizontal deflection frequency f_{H}, in order to form a low output impedance at the ultor voltage terminal. In this way, a desirable high voltage stability versus beam current is obtained.

As indicated before, the current in the tertiary winding may, disadvantageously, continue in the form of ringing current during trace. By transformer action the parasitic ringing current appears also in the primary winding and affects voltages produced in other windings of the flyback transformer. The ringing current may, disadvantageously, disturb the deflection circuit, resulting in dark vertical bars on the left side of the displayed raster, particularly if an east-west raster correction circuit is employed. Ringing voltage that is produced in a secondary winding of the flyback transformer may also disturb the phasing of the horizontal oscillator resulting in distortion of a pattern of vertical raster lines. Consequently, vertical lines of, for example, a crosshatch pattern will not be perfectly straight. Such disturbance in the horizontal oscillator synchronization may occur in a deflection circuit in which a retrace voltage in the secondary winding of the flyback transformer is used for providing feedback synchronization information to the horizontal oscillator. It is, therefore, desirable to reduce the amplitude and duration of the ringing current in the tertiary, high voltage winding, during, for example, the trace interval.

In some prior art circuits, a resistor coupled in the current path of the current in the tertiary winding is used to obtain sufficient damping action for the ringing current. The added resistor may have a rather large value, on the order of 20 to 40 kOhms. The narrow retrace current pulse in the tertiary winding flows also through the added ringing damping resistor. The result is a voltage drop of between 0.8kV and 1.5kV at, for example, 1mA average beam current. Disadvantageously, this prior art solution also increases significantly the output impedance at the ultor voltage terminal. Furthermore, the added resistor, disadvantageously, dissipates a high amount of power.

An arrangement in which a damper diode is utilised and in which, for a short period, at the end of retrace, an impedance is placed in parallel with the series combination of deflection yoke and s-shaping capacitor, is disclosed by US-A-4 272 705.

A power supply, embodying an aspect of the invention, of a television apparatus generates a high voltage that is applied to a load of the television apparatus. The power supply includes a source of an input signal at a frequency related to a deflection frequency and a flyback transformer having a high voltage winding. A high voltage that includes a periodic flyback pulse having a duration that is related to the frequency of the input signal is generated in the high voltage winding. The high voltage is applied to the load during a first interval of the flyback pulse. The high voltage is decoupled from the load following the first interval. An impedance, coupled to the flyback transformer conducts, during a second interval of the period of flyback pulse, a ringing current that is produced in the transformer such that during the second interval the impedance dampens the ringing current. A switching arrangement is coupled to the transformer for conducting a portion of the ringing current through the switching arrangement instead of through the impedance, that substantially reduces the damping of the ringing current by the impedance, during at least part of the first interval of the flyback pulse.

In the Drawing:
FIGURE 1 illustrates a high voltage power supply including a ringing current damper, embodying an aspect of the invention;
FIGURES 2a-2c illustrate waveforms useful for explaining the operation of the power supply of FIGURE 1; and
FIGURES 3a-3b illustrates waveforms of a power supply without employing the ringing current damper of FIGURE 1.

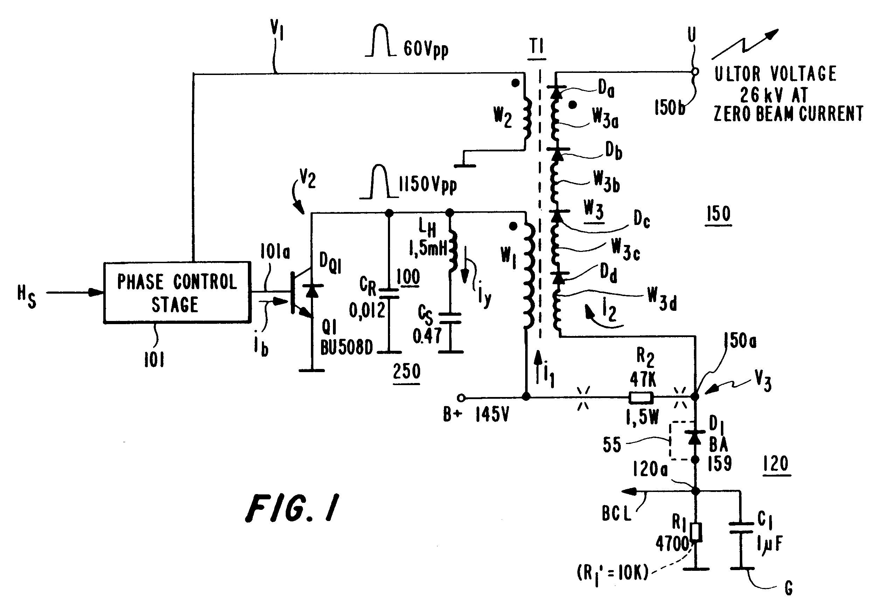

FIGURE 1 illustrates a high voltage power supply, enbodying an aspect of the invention. In the power supply of FIGURE 1, a horizontal deflection circuit 250 that provides horizontal deflection for a CRT, not shown, includes a switching transistor Q1 operating at a horizontal frequency f_{H} and an anti-parallel coupled damper diode D_{Q1}. A retrace capacitance C_{R} is coupled in parallel with transistor Q1 and diode D_{Q1}. A deflection winding L_{H} is coupled in series with an S-shaping trace capacitance Cₛ, forming a circuit branch that is coupled in parallel with each of transistor Q1, diode D_{Q1} and retrace capaitance C_{R} to form a retrace resonant circuit 100 during horizontal retrace.

A phase-control stage 101 that includes a horizontal oscillator and a phase detector, not shown in the drawing, is responsive to a horizontal synchronizing signal Hₛ. Signal Hₛ is derived from, for example, a video detector of a television receiver, not shown in the drawing. Stage 101 applies a drive signal 101a to a base-emitter junction of a transistor Q1 for producing a base drive current i_{b} at the horizontal frequency f_{H} . Current i_{b} causes the switching operation in transistor Q1 that causes a deflection current i_{y} to flow in winding L_{H}. A primary winding W₁ of a flyback transformer T1 is coupled between a source of a B+ supply voltage and the collector of transistor Q1. A secondary winding W₂ of transformer T1 is coupled to stage 101 to provide a feedback retrace signal V₁ produced by the switching operation of transistor Q1. Stage 101 generates drive signal 101a, causing horizontal deflection current i_{y} to be exactly phased to signal Hₛ.

A retrace voltage V₂, generated at a junction terminal between primary winding W₁ of transformer T1 and the collector of transistor Q1, is magnetically coupled to winding segments W₃ₐ W_{3b}, W_{3c} and W_{3d} of a segmented tertiary, high voltage winding W₃ of transformer T1. The retrace pulse voltages in winding segments W₃ₐ - W_{3d} are rectified using rectifying diodes Dₐ-D_{d}. Diodes Dₐ-D_{d} and winding segments W₃ₐ-W_{3d} that are alternately coupled in series, form a diode split arrangement 150 having an end terminal 150b at which ultor voltage U is developed. The other end terminal, a terminal 150a, is coupled to a cathode of a diode D₁ of a current ringing damping arrangement 120, embodying an aspect of the invention. The anode of diode D₁ is coupled to a terminal 120a of a beam current sampling resistor R₁ , coupled in parallel with a filter capacitor C₁. The other terminals of resistor R₁ and of capacitor C₁ are coupled to a common ground potential G.

Diode D₁ is conductive close to the peak of the retrace voltage developed in winding W₃. Diode D₁ is poled in the same direction as diodes Dₐ-D_{d}. A beam current indicative voltage BCL at a low level is developed at terminal 120a and applied to a conventional beam current limiter, not shown. Current ringing damping arrangement 120 includes a damping resistor R₂ coupled to receive the B+ supply voltage of, illustratively, +145V and to apply the B+ supply voltage to terminal 150a of Diode D₁.

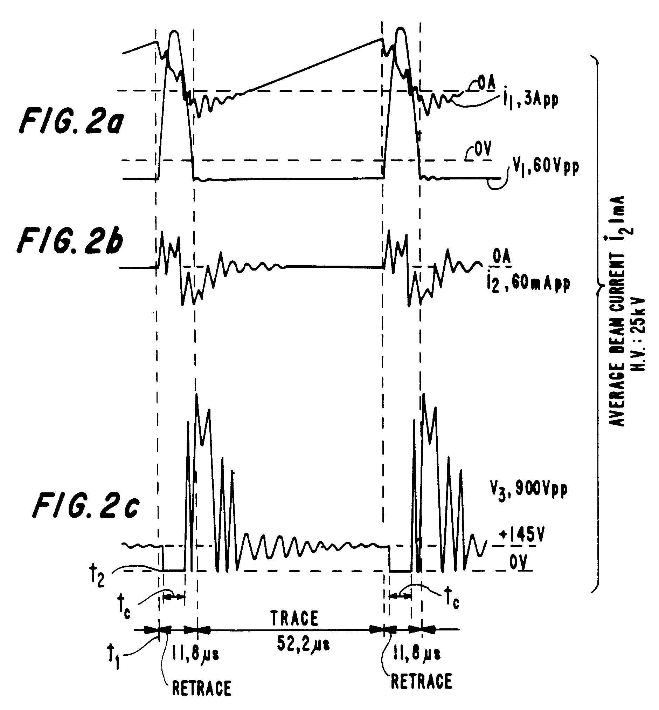

FIGURES 2a-2c illustrate waveforms useful in explaining the operation of the high voltage power supply of FIGURE 1. Similar numbers and symbols in FIGURE 1 and in 2a-2c indicate similiar items or functions.

At the beginning of each retrace interval, designated as time t₁ in FIGUREs 2a-2c, transistor Q1 of FIGURE 1 becomes nonconductive, causing a retrace voltage V₂ to develop across primary winding W₁ of flyback transformer T1 and a retrace voltage V₁ to develop across winding W₂. The waveform of retrace voltage V₂ is similar in shape to that of voltage V₁ of FIGURE 2a. The peak-to-peak amplitude of voltage V₂ is approximately 1150V and that of voltage V₁ 60V. Similarly, corresponding retrace voltages are developed across each winding segment W₃ₐ-W_{3d} of tertiary winding W₃.

Throughout trace, and at time t₁ of FIGURES 2a-2c, the beginning of retrace, diode D₁ of FIGURE 1 is back biased by the +145V that is applied via resistor R₂ to the cathode of diode D₁. As a result, a voltage V₃ at terminal 150a has an average value that is equal to +145V during trace and at the beginning time, t₁, of retrace of FIGURE 2c.

As the level of the retrace voltage at winding segment W_{3d} increases, during the first half of retrace, a current i₂, flowing in winding W₃, increases. Current i₂ that also flows through resistor R₂ causes voltage V₃ to decrease until diode D₁ becomes forward biased and clamps voltage V₃ to approximately zero volts, as shown at time t₂ in FIGURE 2c. The further increasing current i₂ of FIGURE 2b in winding W₃ of FIGURE 1 flows mainly through forward biased diode D₁ and bypasses resistor R₂, during interval t_{c} of FIGURE 2c. Therefore, advantageously, resister R₂ does not increase the output impedance at ultor terminal 150b during interval t_{c} of FIGURE 2c. During interval t_{c} current i₂ of FIGURE 1 charges the ultor capacitance formed by the CRT, not shown.

During interval t_{c} of FIGURE 2c, current i₂ of FIGURE 2b is not damped since conductive diode D₁ of FIGURE 1 bypasses resistor R₂. When diode D₁ is conductive, the impedance developed across resistor R₂ is formed by the series arrangement of the "ON" resistance of diode D₁ and the impedance of capacitor C₁ that is low at the horizontal frequency f_{H} and its harmonics. Consequently, during interval t_{c} of FIGURE 2c, current i₂ of FIGURE 2b is an undamped oscillatory current. Current i₂ oscillates at the fifth harmonic of the fundamental frequency f_{H} of voltage V₁ of FIGURE 2a. The oscillation frequency is determined in accordance with the resonance frequency to which a resonance circuit that includes the leakage inductance of transformer T1 is tuned. The result is that the output impedance at ultor terminal 150b is advantageously low, that provides better ultor voltage regulation as a function of beam current than if resistor R₂ were not bypassed.

During interval t_{c} of FIGURE 2c, voltage V₃ is clamped to the small, negative level of voltage BCL developed across resistor R₁ and capacitor C₁ of FIGURE 1. As indicated before, voltage BCL is used by a beam current limiter, not shown, for limiting excessive beam current in the CRT. Thus, advantageously, damping arrangement 120 can be used together with the beam current sampling resistor R₁. At the end of interval t_{c} of FIGURE 2c, diodes Dₐ, D_{b}, D_{c}, and D_{d} become non-conductive, and ringing current i₂ of FIGURE 2b produces a high amplitude of ringing in voltage V₃ of FIGURE 2c, developed across damping resistor R₂ of FIGURE 1.

During the second part of retrace that follows interval t_{c}, current i₂ of FIGURE 2b and the B+ supply voltage cause diode D₁ of FIGURE 1 to be back biased. Therefore, during the second part of retrace and also during trace, diode D₁ is back biased, causing current i₂ to flow mainly through damping resistor R₂ that is coupled in series with winding W₃. Consequently, in accordance with an aspect of the invention, energy dissipating resistor R₂ dampens the ringing component of current i₂ of FIGURE 2b. The result is that the potentially ill effects of such current ringing, as explained before, are substantially reduced.

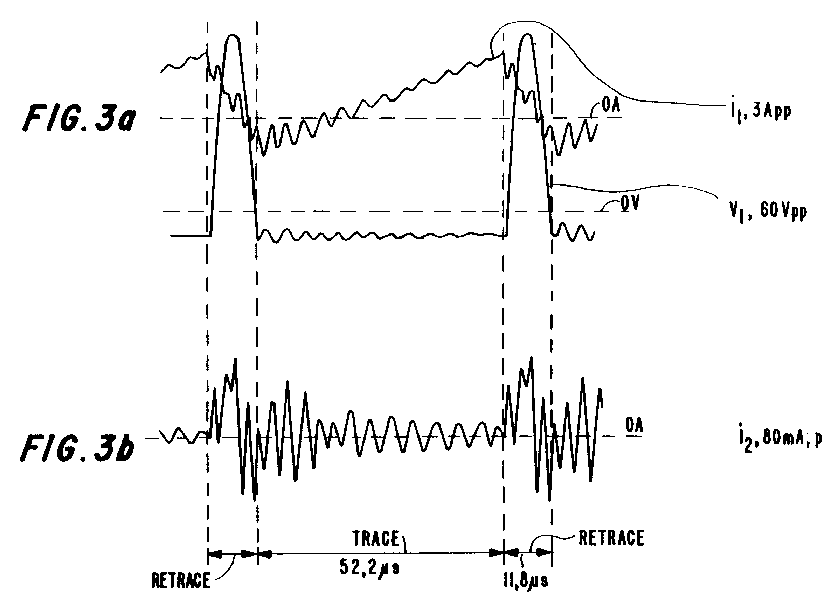

FIGURES 3a and 3b illustrate waveforms of a modified arrangement of FIGURE 1 in which resistor R₂ of FIGURE 1 is removed, in which a larger resistor of 10kΩ is substituted for resistor R₁ of FIGURE 1 having a value of 4.7 kΩ and in which diode D₁ of FIGURE 1 is replaced by a jumper wire 55, all as shown by dash lines in FIGURE 1. Such modified arrangement does not include damping arrangement 120 of the invention. Similar numbers and symbols in FIGUREs 2a-2c and in FIGUREs 3a-3b indicate similar items or functions.

In order to obtain a predetermined level of voltage BCL at a corresponding level of current i₂ that are, each, the same in both the modified and the unmodified arrangement of FIGURE 1, the value of resistor R₁, in the unmodified arrangement, is smaller. This is so because of the higher DC voltage level developed in resistor R₁ as a result of the rectification caused by diode D₁ in the unmodified arrangement.

By comparing FIGUREs 3b and 2b, for example, it can be seen that the amplitude of the ringing current component of current i₂ of FIGURE 1 during trace is, advantageously, significantly lower when damping arrangement 120 is included in the high voltage power supply.

## Claims

1. A power supply of a television apparatus for generating a high voltage that is applied to a load of said television apparatus, comprising:
a source (101) of an input signal (101a) at a first frequency related to a deflection frequency;
a flyback transformer (T1) having a high voltage winding (W₃);
means (250) responsive to said input signal (101a) and coupled to said flyback transformer (T1) for generating, in said high voltage winding, said high voltage that includes a periodic flyback pulse having a duration that is related to said frequency of said input signal;
means (Dₐ-D_{d}) for applying said high voltage to said load during a first interval (t_{c}) of said flyback pulse and for decoupling said high voltage from said load at the end of said first interval;
an impedance (R₂) coupled to said flyback transformer (T1) for conducting, during a subsequent second interval (end of t_{c} to end of retrace) of said flyback pulse, a ringing current that is produced in said transformer such that during said second interval said impedance damps said ringing current;
characterized by
switching means (D₁) coupled to said transformer (T1) for conducting a portion of said ringing current through said switching means (D₁) instead of through said impedance (R₂) to substantially reduce the damping of said ringing current by said impedance during said first interval of said flyback pulse.

2. A power supply according to claim 1 characterized in that said impedance comprises a resitance (R₂) that is coupled in series with said high voltage winding (W₃) and wherein said switching means (D₁) is coupled to said resistance (R₂) in a manner that bypasses said resistance during said first interval of said flyback pulse.

3. A power supply according to claim 1 characterized in that said switching means comprises a rectifier (D₁) that is conductive during said first interval (t_{c}) of said flyback pulse and that is nonconductive substantially outside said first interval of said flyback pulse.

4. A power supply according to claim 3 characterized in that said impedance (R₂) is coupled between a source of a supply voltage and an electrode (cathode) of said rectifier (D₁), to back bias said rectifier to prevent conduction in said rectifier as long as said flyback pulse is less than a level predetermined in accordance with said supply voltage and said impedance.

5. A power supply according to claim 3 characterized by a beam current sampling resistance (R₁) coupled in series with said rectifier (D₁) and said high voltage winding (W₃).

6. A power supply according to claim 3 characterized in that said rectifier (D₁) is coupled to a first terminal (150a) of said high voltage winding (W₃) and wherein a high voltage rectifier (Dₐ) is coupled to a second terminal (150b) of said high voltage winding remote from said first terminal to produce an ultor voltage (U) at an output terminal.

7. A power supply according to claim 1 characterized in that said high voltage generating means comprise a retrace resonant circuit (100) of a horizontal deflection circuit (250) coupled to said transformer (T1) and second switching means (Q1) responsive to said input signal and coupled to said transformer for generating in said transformer said flyback pulse, forming a retrace pulse that is repetitive at said deflection frequency.

8. A power supply according to claim 1 characterized in that a leakage inductance of said flyback transformer (T1) causes said ringing current to be generated, and wherein ringing current flows in said high voltage winding (W₃).

## Patentansprüche

1. Stromversorgung für ein Fernsehgerät zur Erzeugung einer Hochspannung, die einer Last des Fernsehgerätes zugeführt wird, umfassend:
eine Quelle (101) eines Eingangssignals (101a) mit einer ersten, auf eine Ablenkfrequenz bezogenen Frequenz;
einen Zeilenendtransformator (T1) mit einer Hochspannungswicklung (w₃);
Mittel (250), die auf das Eingangssignal (101a) ansprechen und mit dem Zeilenendtransformator (T1) verbunden sind, um in der Hochspannungswicklung die Hochspannung zu erzeugen, die einen periodischen Rücklauf-Impuls enthält, dessen Dauer auf die Frequenz des Eingangssignals bezogen ist;
Mittel (Dₐ-D_{d}) zur Zuführung der Hochspannung zu der Last während eines ersten Intervalls (t_{c}) des Rücklauf-Impulses und zur Entkopplung der Hochspannung von der Last am Ende des ersten Intervalls;
eine Impedanz (R₂), die mit dem Zeilenendtransformator (T1) verbunden ist, um während des nachfolgenden zweiten Intervalls (Ende von t_{c} bis Ende des Rücklaufs) des Rücklauf-Impulses einen Überschwingstrom zu führen, der in dem Transformator erzeugt wird, so daß die Impedanz während des zweiten Intervalls den Überschwingstrom dämpft;
gekennzeichnet durch:
Schaltmittel (D₁), die mit dem Transformator (T1) verbunden sind, um einen Teil des Überschwingstroms durch die Schaltmittel (D₁) anstatt durch die Impedanz (R₂) zu leiten, um die Dämpfung des Überschwingstroms durch die Impedanz während des ersten Intervalls des Rücklaufimpulses wesentlich zu vermindern.

2. Stromversorgung nach Anspruch 1, dadurch gekennzeichnet, daß die Impedanz einen Widerstand (R₂) umfaßt, der in Reihe mit der Hochspannungswicklung (W₃) geschaltet ist, und daß die Schaltmittel (D₁ ) mit dem Widerstand (R₂) so verbunden sind, daß der Widerstand während des ersten Intervalls des Rücklaufimpulses überbrückt wird.

3. Stromversorgung nach Anspruch 1, dadurch gekennzeichnet, daß die Schaltmittel einen Gleichrichter (D₁) umfassen, der während des ersten Intervalls (t_{c}) des Rücklauf-Impulses leitend ist, und der außerhalb des ersten Intervalls des Rücklauf-Impulses im wesentlichen nichtleitend ist.

4. Stromversorgung nach Anspruch 3, dadurch gekennzeichnet, daß die Impedanz (R₂) zwischen einer Quelle für eine Versorgungsspannung und einer Elektrode (Kathode) des Gleichrichters (D₁) liegt, um den Gleichrichter in Sperrichtung vorzuspannen und eine Leitung in dem Gleichrichter so lange zu verhindern, bis der Rücklauf-Impuls kleiner als ein Pegel ist, der gemäß der Versorgungsspannung und der Impedanz vorgegeben ist.

5. Stromversorgung nach Anspruch 3, gekennzeichnet durch einen den Strahlstrom abtastenden Widerstand (R₁ ), der in Reihe mit dem Gleichrichter (D₁ ) und der Hochspannungswicklung (W₃) geschaltet ist.

6. Stromversorgung nach Anspruch 3, dadurch gekennzeichnet, daß der Gleichrichter (D₁ ) mit einem ersten Anschluß (150a) der Hochspannungswicklung (W₃) verbunden ist, und daß ein Hochspannungs-Gleichrichter (Dₐ) mit einem zweiten Anschluß (150b) der Hochspannungswicklung verbunden ist, der von dem ersten Anschluß abgekehrt ist, um an einem Ausgangsanschluß eine Endanodenspannung (U) zu erzeugen.

7. Stromversorgung nach Anspruch 1, dadurch gekennzeichnet, daß die die Hochspannung erzeugenden Mittel eine Rücklauf-Resonanzschaltung (100) einer Horizontal-Ablenkschaltung (250), die mit dem Transformator (T1) verbunden ist, und zweite Schaltmittel (Q1) umfassen, die auf das Eingangssignal ansprechen und mit dem Transformator verbunden sind, um in dem Transformator den Rücklauf-Impuls zu erzeugen, so daß ein Rücklauf-Impuls gebildet wird, der sich mit der Ablenkfrequenz wiederholt.

8. Stromversorgung nach Anspruch 1, dadurch gekennzeichnet, daß eine Streuinduktivität des Zeilenendtransformators (T1) die Erzeugung des Überschwingstroms bewirkt, und daß der Überschwingstrom in der Hochspannungswicklung (W₃) fließt.

## Revendications

1. Source d'alimentation en énergie pour un appareil de télévision pour générer une haute tension qui est appliquée à une charge dudit appareil de télévision comprenant :
- une source (101) d'un signal d'entrée (101a) à une première fréquence en relation avec une fréquence de déviation ;
- un transformateur de retour (T1) ayant un enroulement de haute tension (W₃) ;
- des moyens (250) agissant en réponse audit signal d'entrée ((101a) et couplés audit transformateur de retour ((T1) pour générer, dans ledit enroulement de haute tension, ladite haute tension qui comprend une impulsion périodique de retour ayant une durée qui est en relation avec ladite fréquence dudit signal d'entrée ;
- des moyens (Dₐ-D_{d}) pour appliquer ladite haute tension à ladite charge pendant un intervalle (t_{c}) de ladite impulsion de retour et pour découpler ladite haute tension de ladite charge à la fin dudit premier intervalle;
- une impédance (R₂) couplée audit transformateur de retour (T1) pour conduire, pendant un second intervalle suivant (fin de t_{c} vers la fin du retour du spot) de ladite impédance de retour, un courant de dédoublement d'image qui est produit dans ledit transformateur de manière que, pendant ledit second intervalle, ladite impédance amortisse ledit courant de dédoublement d'image caractérisée par :
des moyens de commutation (D₁) couplés audit transformateur pour conduire une portion dudit courant de dédoublement d'image au travers dudit moyen de commutation (D₁) au lieu d'au travers ladite impédance (R₂) afin de réduire sensiblement l'amortissement dudit courant de dédoublement d'image par ladite impédance, pendant le premier intervalle de ladite impulsion de retour.

2. Source d'alimentation selon la revendication 1 caractérisée en ce que ladite impédance comprend une résistance (R₂) qui est couplée en série avec ledit enroulement de haute tension (W₃) et en ce que lesdits moyens de commutation (D₁) sont couplés à ladite résistance (R₂) de façon à by-passer ladite résistance pendant ledit premier intervalle de ladite impulsion de retour.

3. Source d'alimentation selon la revendication 1 caractérisée en ce que lesdits moyens de commutation comprennent un redresseur (D₁) qui est conducteur pendant ledit premier intervalle (t_{c}) de ladite impulsion de retour et qui est non conducteur essentiellement à l'extérieur dudit premier intervalle de l'impulsion de retour.

4. Source d'alimentation selon la revendication 1 caractérisée en ce que ladite impédance (R₂) est couplée entre une source d'une tension d'alimentation et une électrode (cathode) dudit redresseur (D₁) pour polariser en retour ledit redresseur afin d'éviter la conduction de ce redresseur tant que l'impulsion de retour est inférieure à un niveau prédéterminé selon ladite tension d'alimentation et ladite impédance.

5. Source d'alimentation selon la revendication 3 caractérisée par une résistance d'échantillonnage de courant de faisceau (R₁), couplée en série avec ledit redresseur (D₁) et ledit enroulement de haute tension (W₃).

6. Source d'alimentation selon la revendication 3 caractérisée en ce que ledit redresseur (D₁) est couplé à une première borne (150a) dudit enroulement de haute tension (W₃) et dans laquelle un redresseur haute tension (Dₐ) est couplé à une seconde borne (150b) dudit enroulement de haute tension, éloignée de ladite première borne afin de produire une tension finale d'accélération (U) à ladite borne de sortie.

7. Source d'alimentation selon la revendication 1 caractérisée en ce que lesdits moyens générant la haute tension comprennent un circuit résonnant de retour (100) d'un circuit de déviation horizontal (250) couplé audit transformateur (T1) et des seconds moyens de commutation (Q1) agissant en réponse audit signal d'entrée et couplés audit transformateur pour générer dans ledit transformateur ladite impulsion de retour, en formant une impulsion de retour qui est répétitive à ladite fréquence de déviation.

8. Source d'alimentation selon la revendication 1 caractérisée en ce qu'une inductance de fuite dudit transformateur de retour (T1) provoque la génération dudit courant de dédoublement d'image, et dans laquelle ledit courant de dédoublement d'image circule dans ledit enroulement de haute tension (W₃).
